# FASCICULE DE BREVET EUROPEEN

(11) **EP 3 842 923 B1**
(45) Date de publication et mention de la délivrance du brevet: **30.11.2022**
(21) Numéro de dépôt: 20214599.1
(22) Date de dépôt: 16.12.2020
(51) Int. Cl.: G06F 3/16

(54) **ENCEINTE CONNECTÉE COMPRENANT UNE INTERFACE LAN ET UNE INTERFACE WPAN**
VERNETZTE BOX MIT EINER LAN- UND EINER WPAN-SCHNITTSTELLE
CONNECTED ENCLOSURE COMPRISING A LAN INTERFACE AND A WPAN INTERFACE

(30) Priorité: 20.12.2019 FR 1915298
(43) Date de publication de la demande: 30.06.2021
(73) Titulaire: SAGEMCOM BROADBAND SAS, 92500 Rueil-Malmaison (FR)
(72) Inventeur: BOUVIGNE, Gabriel, 92500 RUEIL MALMAISON (FR)
(74) Mandataire: Lavaud, Thomas

(56) Documents cités:
- EP-A1- 2 893 531
- WO-A1-2018/100093
- US-A1- 2015 326 986
- US-A1- 2018 020 308
- US-B2- 10 481 859

## Description

L'invention concerne le domaine des enceintes connectées.

### ARRIERE PLAN DE L'INVENTION

Aujourd'hui, les enceintes connectées munies d'une interface Wi-Fi fournissent de nombreuses fonctionnalités et sont très appréciées des utilisateurs. En particulier, il est possible de connecter une enceinte Wi-Fi à un boîtier décodeur (ou STB, pour *Set-Top Box*) de manière à améliorer l'expérience acoustique d'un utilisateur lors de la restitution d'un contenu audio/vidéo (d'un film par exemple).

Cependant, certains utilisateurs déjà équipés d'une enceinte munie d'une interface Bluetooth sont peu enclins à s'équiper d'une enceinte Wi-Fi.

En effet, comme il n'existe pas de solution simple et répandue pour faire coopérer une enceinte Wi-Fi et une enceinte Bluetooth, ces utilisateurs considèrent que, s'ils achètent une enceinte Wi-Fi, leur enceinte Bluetooth devient inutile et leur investissement initial, c'est-à-dire l'achat de l'enceinte Bluetooth, est perdu. Le coût de l'enceinte Bluetooth se transforme donc en un surcoût inutile dans le coût total du système de restitution audio.

Plusieurs pistes ont été envisagées pour utiliser malgré tout l'enceinte Bluetooth et, en particulier, pour utiliser l'enceinte Bluetooth avec un boîtier décodeur auquel est aussi possiblement connectée une enceinte Wi-Fi.

Une première piste consiste à connecter l'enceinte Bluetooth au boîtier décodeur en utilisant un transmetteur Bluetooth. Cette solution nécessite donc un équipement supplémentaire (le transmetteur Bluetooth), et augmente par conséquent le coût du système de restitution audio. De plus, l'utilisation du transmetteur Bluetooth induit une latence non communiquée au boîtier décodeur et donc non connue de ce dernier. L'utilisation du transmetteur Bluetooth ne permet par ailleurs pas de panacher des connectivités différentes.

Une seconde piste consiste à permettre à un boîtier décodeur d'utiliser des enceintes de plusieurs types différents. Cette solution nécessite la présence d'une interface Bluetooth sur le boîtier décodeur, ce qui est rarement le cas. Cette solution nécessite par ailleurs que le boîtier décodeur soit conçu spécifiquement pour la mettre en œuvre.

Ces pistes sont donc relativement coûteuses et complexes, et ne permettent donc pas d'améliorer significativement l'attractivité commerciale d'une enceinte Wi-Fi eu égard aux réticences des utilisateurs précédemment évoquées.

Le document US 2018/020308 A1 décrit un système d'enceintes comprenant une enceinte maître et des enceintes esclaves, l'enceinte maître recevant d'une source un signal audio et transmettant ledit signal audio aux enceintes esclaves.

### OBJET DE L'INVENTION

L'invention a pour objet de permettre la réutilisation d'une enceinte Bluetooth lors de l'ajout d'une enceinte Wi-Fi dans un système de restitution audio.

### RESUME DE L'INVENTION

En vue de la réalisation de ce but, on propose une enceinte connectée selon la revendication 1.

Ainsi, les enceintes externes (par exemple des enceintes Bluetooth) appairées avec l'enceinte connectée selon l'invention forment des voies audio, par exemple des voies audio arrière, du système de restitution audio multicanaux qui intègre l'enceinte connectée et les enceintes externes. L'enceinte connectée selon l'invention permet donc de réutiliser les enceintes externes pour former le système de restitution audio multicanaux qui améliore la restitution sonore. L'utilisateur n'a donc plus l'impression d'avoir « gâché » son investissement initial pour acheter la ou les enceintes externes, et est donc plus enclin à acquérir l'enceinte connectée selon l'invention dont l'attractivité commerciale a par conséquent été améliorée.

On propose aussi une enceinte connectée telle que celle qui vient d'être décrite, l'enceinte connectée pouvant être appairée avec au moins deux enceintes externes individuellement, l'enceinte connectée étant agencée pour transmettre directement à chaque enceinte externe le signal audio réparti qui est alloué à ladite enceinte externe.

On propose aussi une enceinte connectée telle que celle qui vient d'être décrite, l'enceinte connectée pouvant être appairée avec une première enceinte externe qui est elle-même appairée avec une deuxième enceinte externe, l'enceinte connectée étant agencée pour transmettre directement à la première enceinte externe un premier signal audio réparti alloué à la première enceinte externe et un deuxième signal audio réparti alloué à la deuxième enceinte externe, le deuxième signal audio réparti pouvant alors être transmis par la première enceinte externe à la deuxième enceinte externe.

On propose aussi une enceinte connectée telle que celle qui vient d'être décrite, l'enceinte connectée étant une enceinte multicanaux.

On propose aussi une enceinte connectée telle que celle qui vient d'être décrite, l'enceinte connectée étant une enceinte monocanal agencée pour être connectée avec une autre enceinte connectée via l'interface LAN.

On propose aussi une enceinte connectée telle que celle qui vient d'être décrite, l'enceinte connectée étant agencée pour réduire une fréquence d'échantillonnage du signal audio de test et du signal sonore de test reçu, pour calculer une première approximation de la latence de transmission et de restitution, puis pour augmenter la fréquence d'échantillonnage et pour recalculer la latence de transmission et de restitution en ne gardant qu'une fenêtre temporelle de durée réduite centrée autour de la première approximation de la latence de transmission et de restitution.

On propose aussi une enceinte connectée telle que celle qui vient d'être décrite, dans laquelle le signal sonore de test émis est superposé à un signal sonore utile d'un contenu audio restitué.

On propose aussi une enceinte connectée telle que celle qui vient d'être décrite, dans laquelle le signal sonore de test émis est un signal normalement inaudible pour un être humain.

On propose aussi une enceinte connectée telle que celle qui vient d'être décrite, l'enceinte connectée étant agencée pour ajuster un gain et/ou pour réaliser un ajustement fréquentiel sur au moins une voie audio intégrant une enceinte externe.

On propose aussi une enceinte connectée telle que celle qui vient d'être décrite, l'enceinte connectée étant agencée pour évaluer une valeur d'une latence de lecture de l'enceinte connectée, et pour transmettre la valeur de la latence de lecture à la source audio.

On propose aussi une enceinte connectée telle que celle qui vient d'être décrite, dans laquelle les moyens d'appairage mettent en œuvre un appairage selon le profil Bluetooth A2DP.

On propose aussi une enceinte connectée telle que celle qui vient d'être décrite, dans laquelle les moyens d'appairage comportent un bouton physique.

On propose aussi une enceinte connectée telle que celle qui vient d'être décrite, dans laquelle les moyens d'appairage comportent un module d'appairage agencé pour coopérer avec une interface de configuration fournie par un API ou par une page WEB de configuration.

On propose aussi une enceinte connectée telle que celle qui vient d'être décrite, dans laquelle l'interface LAN est une interface Wi-Fi.

On propose aussi une enceinte connectée telle que celle qui vient d'être décrite, dans laquelle l'interface LAN est une interface Ethernet.

On propose aussi une enceinte connectée telle que celle qui vient d'être décrite, dans laquelle l'interface WPAN est une interface Bluetooth.

On propose en outre un procédé de restitution audio mis en œuvre dans une enceinte connectée telle que précédemment décrite, comprenant les étapes de :
- appairer l'enceinte connectée avec une ou des enceintes externes munies chacune d'une interface WPAN externe ;
- acquérir un signal audio d'entrée d'une source audio via l'interface LAN ;
- produire à partir du signal audio d'entrée au moins un signal audio réparti ;
- allouer chaque signal audio réparti à l'une des enceintes externes appairées avec l'enceinte connectée ;
- transmettre à chaque enceinte externe via l'interface WPAN de l'enceinte connectée et l'interface WPAN externe de ladite enceinte externe le signal audio réparti qui est alloué à ladite enceinte externe, de sorte que l'enceinte connectée et les enceintes externes forment un système de restitution audio multicanaux.

On propose de plus un programme d'ordinateur comprenant des instructions qui conduisent l'enceinte connectée telle que précédemment décrite à exécuter les étapes du procédé de restitution audio tel que précédemment décrit.

On propose en outre un support d'enregistrement lisible par ordinateur, sur lequel est enregistré le programme d'ordinateur qui vient d'être décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés, parmi lesquels :
[Fig. 1] la figure 1 représente schématiquement une enceinte connectée selon l'invention ;
[Fig. 2] la figure 2 est une vue en perspective d'une enceinte connectée ;
[Fig. 3] la figure 3 représente une enceinte connectée selon l'invention, deux enceintes Bluetooth, et un boîtier décodeur relié à une télévision ;
[Fig. 4] la figure 4 représente une première enceinte connectée appairée avec deux enceintes Bluetooth, et une deuxième enceinte connectée ;
[Fig. 5] la figure 5 représente une enceinte connectée appairée avec deux enceintes Bluetooth ;
[Fig. 6] la figure 6 représente une enceinte connectée appairée avec une première enceinte Bluetooth elle-même appairée avec une deuxième enceinte Bluetooth ;
[Fig. 7] la figure 7 représente une première enceinte connectée appairée avec une première enceinte Bluetooth et une deuxième enceinte connectée appairée avec une deuxième enceinte Bluetooth ;
[Fig. 8] la figure 8 représente une première enceinte connectée appairée avec une première enceinte Bluetooth et avec une deuxième enceinte Bluetooth, et une deuxième enceinte connectée ;
[Fig. 9] la figure 9 représente une première enceinte connectée appairée avec une première enceinte Bluetooth elle-même appairée avec une deuxième enceinte Bluetooth, et une deuxième enceinte connectée ;
[Fig. 10] la figure 10 représente des étapes d'un procédé de calibration visant à ajuster la latence de transmission et de restitution ;
[Fig. 11] la figure 11 comprend deux graphiques représentant respectivement un signal audio de test et un signal sonore de test reçu ;
[Fig. 12] la figure 12 comprend trois graphiques représentant respectivement, dans le domaine temporel, un signal sonore utile, un signal sonore de test émis et un signal combiné émis ;
[Fig. 13] la figure 11 comprend trois graphiques représentant respectivement, dans le domaine fréquentiel, un signal sonore utile, un signal sonore de test émis et un signal combiné émis ;
[Fig. 14] la figure 14 représente des étapes d'un procédé de restitution audio.

### DESCRIPTION DETAILLEE DE L'INVENTION

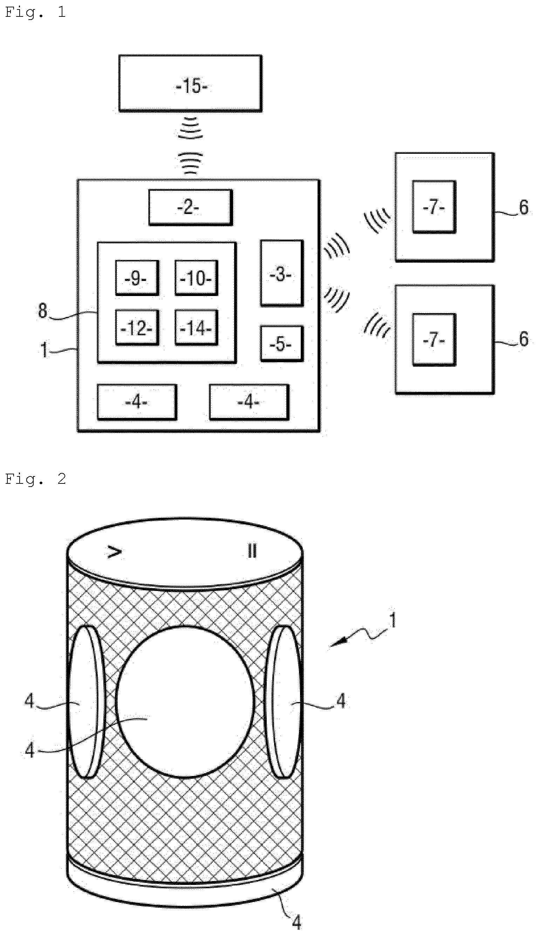

En référence à la figure 1, l'enceinte connectée selon l'invention 1 comporte deux interfaces de connectivité : une interface LAN (pour *Local Area Network*) et une interface WPAN (pour *Wireless Personal Area Network*)*.*

La technologie utilisée par l'interface LAN est par exemple une technologie Wi-Fi ou une technologie Ethernet.

La technologie utilisée par l'interface WPAN est par exemple la technologie Bluetooth, ZigBee, UWB (pour *Ultra WideBand*)*,* ou bien une technologie de type infrarouge, une technologie de type communication optique sans fil, etc.

Ici, l'interface LAN est une interface Wi-Fi 2 et l'interface WPAN est une interface Bluetooth 3.

L'enceinte connectée 1 peut être une enceinte monocanal ou une enceinte multicanaux. L'enceinte connectée 1 comprend un ou plusieurs haut-parleurs 4.

L'enceinte connectée 1 est par exemple semblable à l'enceinte connectée 1 de la figure 2, qui est une enceinte multicanaux capable de restituer plusieurs voies audio et comprenant une pluralité de haut-parleurs 4.

L'enceinte connectée 1 comprend de plus des moyens d'appairage 5 permettant d'appairer l'enceinte connectée 1 avec une ou des enceintes externes 6 munies chacune d'une interface Bluetooth externe 7. On parlera ici d'enceinte Bluetooth pour désigner une telle enceinte externe 6.

Les moyens d'appairage 5 de l'enceinte connectée 1 comprennent ici un ou des boutons physiques, ou bien un module d'appairage. Le module d'appairage est un module logiciel et/ou matériel intégré dans l'enceinte connectée 1. Le module d'appairage permet un appairage via une interface de configuration. L'interface de configuration peut être fournie par une API (pour *Application Programming Interface*) ou par une page Web de configuration, permettant d'accéder à cette configuration par un navigateur, par une application, ou par un équipement tiers. L'interface et/ou les API de configuration peuvent être locales (c'est-à-dire implémentés dans l'enceinte connectée) et/ou distantes (c'est le cas d'une solution de type serveur/*cloud*)*.*

Avantageusement, les moyens d'appairage 5 mettent en œuvre un appairage selon le profil Bluetooth A2DP (pour *Advanced Audio Distribution Profile*) entre l'enceinte connectée 1 et les enceintes externes 6. Ce profil permet une meilleure qualité audio que le profil Bluetooth HFP (*Hands-Free Profile*) qui peut cependant aussi être utilisé.

L'enceinte connectée 1 comprend en outre des moyens de traitement 8 comprenant au moins un composant de traitement 9, un module d'acquisition 10, un module décodeur 12 et un module séparateur 14.

Le composant de traitement 9 est par exemple un microcontrôleur, un processeur, ou bien un circuit logique programmable tel qu'un FPGA (pour *Field Programmable Gate Arrays*) ou un ASIC (pour *Application Specific Integrated Circuit*).

Le module d'acquisition 10 est agencé pour acquérir un signal audio d'entrée d'une source audio via l'interface Wi-Fi 2. La source audio est par exemple un boîtier décodeur 15. Le module décodeur 12 décode le signal audio d'entrée. Le module séparateur 14 produit à partir du signal audio d'entrée au moins un signal audio réparti ainsi qu'un signal audio à destination locale (joué par l'enceinte connectée 1). Les moyens de traitement 8 allouent alors chaque signal audio réparti à l'une des enceintes Bluetooth 6 appairées avec l'enceinte connectée 1. Les moyens de traitement 8 transmettent à chaque enceinte Bluetooth 6 appairée avec l'enceinte connectée 1, via l'interface Bluetooth 3 de l'enceinte connectée et l'interface Bluetooth externe 7 de ladite enceinte Bluetooth 6, le signal audio réparti qui lui est alloué, de sorte que l'enceinte connectée 1 et les enceintes Bluetooth 6 forment un système de restitution audio multicanaux.

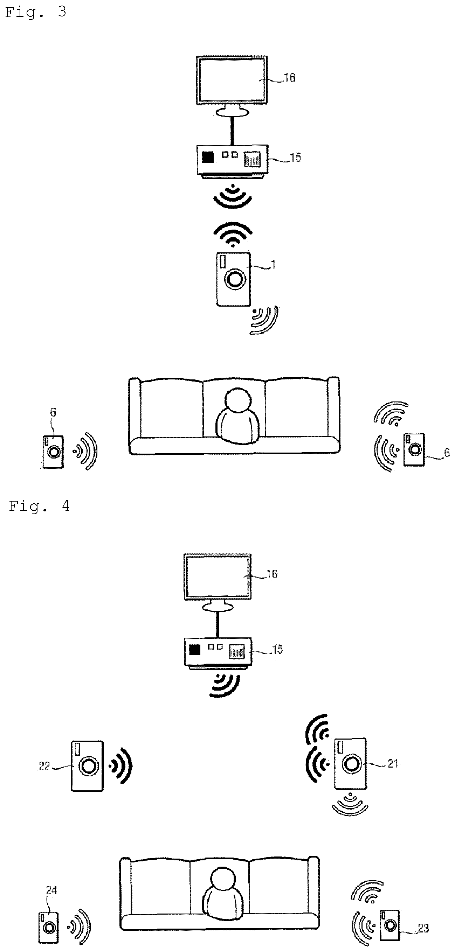

En référence à la figure 3, l'enceinte connectée 1 est ainsi intégrée dans un système de restitution audio multicanaux qui comprend, outre l'enceinte connectée 1, une source audio, en l'occurrence le boîtier décodeur 15 reliée à une télévision 16, ainsi que deux enceintes Bluetooth 6 appairées avec l'enceinte connectée 1. On note que le système de restitution audio multicanaux est en réalité un système de restitution audio/vidéo, mais on ne s'intéresse ici qu'au flux audio et aux signaux sonores échangés dans le système.

Dans ce système de restitution audio multicanaux, les enceintes Bluetooth 6 sont considérées comme des enceintes de voies arrière *surround.*

En référence à la figure 4, on note que le système de restitution audio multicanaux pourrait parfaitement comprendre une première enceinte connectée 21 et une deuxième enceinte connectée 22 qui chacune comprennent une interface Wi-Fi, et au moins l'une des deux enceintes Wi-Fi comprend une interface Bluetooth. Ici, la première enceinte connectée 21 est appairée avec une première enceinte Bluetooth 23 qui est elle-même appairée avec une deuxième enceinte Bluetooth 24.

Dans cette configuration, il est préférable que l'une des deux enceintes connectées joue le rôle d'une enceinte connectée maître. La première enceinte connectée 21 joue ici le rôle l'enceinte connectée maître.

Le boîtier décodeur 15 transmet le signal audio d'entrée à la première enceinte connectée 21 qui le reçoit grâce à son interface Wi-Fi. La première enceinte connectée 21 se charge alors de la répartition des canaux sonores (voies audio gauche, droite et centrale) entre la première enceinte connectée 21 et la deuxième enceinte connectée 22. En particulier, la première enceinte connectée 21 transmet à la deuxième enceinte connectée 22 via son interface Wi-Fi et via l'interface Wi-Fi de la deuxième enceinte connectée 22 un signal audio réparti alloué par les moyens de traitement de la première enceinte connectée 21 à la deuxième enceinte connectée 22.

On s'intéresse maintenant plus précisément à l'appairage entre la ou les enceintes connectées avec les enceintes Bluetooth.

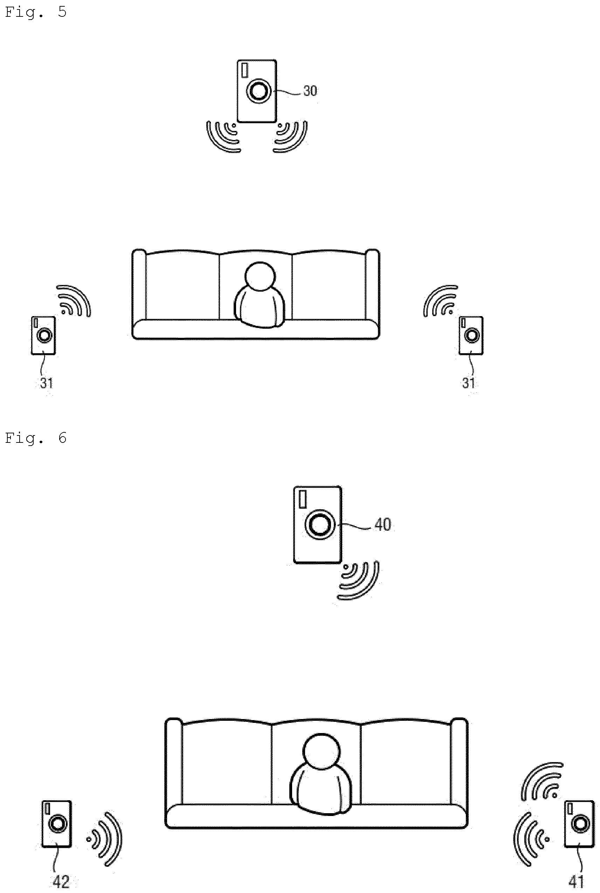

En référence à la figure 5, l'enceinte connectée 30, qui est une enceinte multicanaux, est appairée, via son interface Bluetooth, avec les interfaces Bluetooth externes de deux enceintes Bluetooth 31. Les deux enceintes Bluetooth 31 sont appairées chacune individuellement avec l'enceinte connectée 30. L'enceinte connectée 30 produit à partir du signal audio d'entrée qu'elle reçoit du boîtier décodeur deux signaux audio répartis qui sont alloués chacun à l'une des enceintes Bluetooth 31, et transmet directement à chacune des deux enceintes Bluetooth 31 le signal audio réparti qui est alloué à ladite enceinte Bluetooth 31.

En référence à la figure 6, l'enceinte connectée 40, qui est une enceinte multicanaux, est appairée, via son interface Bluetooth, avec une (unique) première enceinte Bluetooth 41, qui est elle-même appairée avec une autre deuxième enceinte Bluetooth 42. L'enceinte connectée 40 transmet directement à la première enceinte Bluetooth 41 un premier signal audio réparti alloué par les moyens de traitement de l'enceinte connectée 40 à la première enceinte Bluetooth 41, et un deuxième signal audio réparti alloué par les moyens de traitement de l'enceinte connectée 40 à la deuxième enceinte Bluetooth 42. Le deuxième signal audio réparti est alors transmis par la première enceinte Bluetooth 41 à la deuxième enceinte Bluetooth 42.

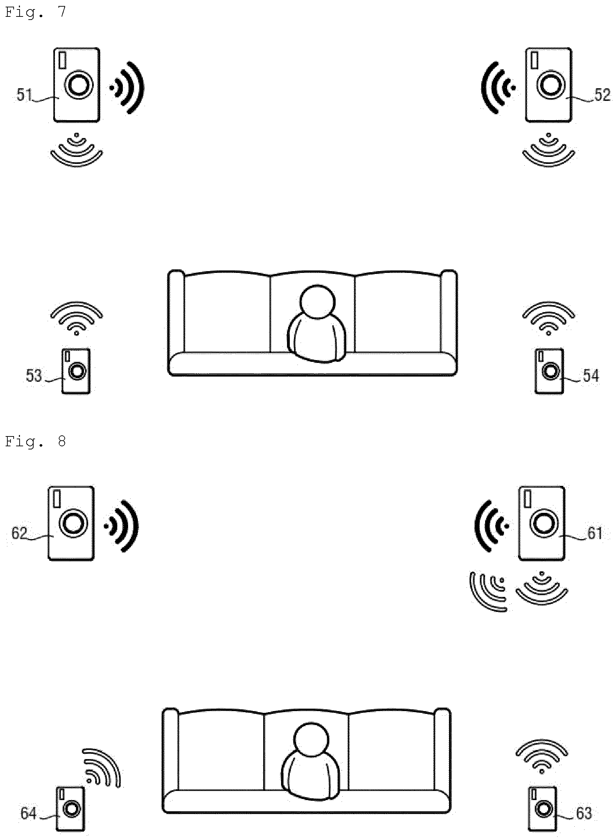

En référence à la figure 7, l'unique enceinte connectée multicanaux est cette fois remplacée par une première enceinte connectée 51 et une deuxième enceinte connectée 52 qui sont toutes deux des enceintes monocanal. La première enceinte connectée 51 est appairée avec la première enceinte Bluetooth 53 et lui transmet directement un premier signal audio réparti qui lui est alloué. La deuxième enceinte connectée 52 est appairée avec la deuxième enceinte Bluetooth 54 et lui transmet directement un deuxième signal audio réparti qui lui est alloué.

En référence à la figure 8, le système de restitution audio multicanaux comprend à nouveau une première enceinte connectée 61 et une deuxième enceinte connectée 62 qui sont toutes deux des enceintes monocanal.

La première enceinte connectée 61 est appairée avec une première enceinte Bluetooth 63 individuellement, et avec une deuxième enceinte Bluetooth 64 individuellement. La première enceinte connectée 61 transmet alors directement à la première enceinte Bluetooth un premier signal audio réparti alloué par les moyens de traitement de la première enceinte connectée 61 à ladite première enceinte Bluetooth 63, et transmet directement à la deuxième enceinte Bluetooth 64 un deuxième signal audio réparti alloué par les moyens de traitement de la première enceinte connectée 61 à ladite deuxième enceinte Bluetooth 64.

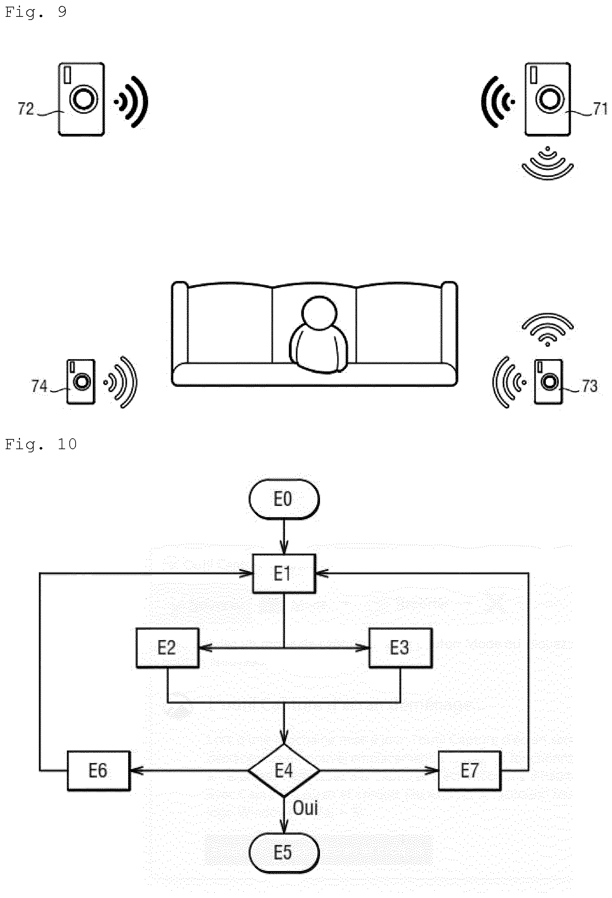

En référence à la figure 9, le système de restitution audio multicanaux comprend à nouveau une première enceinte connectée 71 et une deuxième enceinte connectée 72 qui sont des enceintes monocanal.

La première enceinte connectée 71 est appairée avec une première enceinte Bluetooth 73 qui est elle-même appairée avec une deuxième enceinte Bluetooth 74.

La première enceinte connectée 71 transmet directement à la première enceinte Bluetooth 73 un premier signal audio réparti alloué par les moyens de traitement de la première enceinte connectée 71 à la première enceinte Bluetooth 73, ainsi qu'un deuxième signal audio réparti alloué par les moyens de traitement de la première enceinte connectée 71 à la deuxième enceinte Bluetooth 74.

La première enceinte Bluetooth 73 transmet alors le deuxième signal audio réparti à la deuxième enceinte Bluetooth 74.

On note que, dans le cas où deux enceintes connectées sont utilisées, il est préférable que les enceintes Bluetooth soient appairées avec une seule des enceintes connectées.

En effet, lors d'une lecture audio par Bluetooth, l'horloge de la cible, c'est-à-dire de l'enceinte Bluetooth, est asservie sur l'horloge de la source, c'est à dire de l'enceinte connectée. Il est alors plus fiable, pour contrer d'éventuelles dérives d'horloge, que les horloges des deux enceintes Bluetooth soient asservies à une seule horloge source plutôt qu'à deux horloges source différentes.

La transmission par Bluetooth d'un signal audio réparti et sa restitution par une enceinte Bluetooth appairée à l'enceinte connectée introduit une latence de transmission et de restitution.

Ainsi, dans le système de restitution audio multicanaux, pour que les voies audio avant (comprenant une ou des enceintes connectées) et arrière (comprenant une ou des enceintes Bluetooth) soient restituées de manière synchronisée, il est nécessaire de prendre en compte la latence de transmission et de restitution afin de la compenser. La latence de transmission et de restitution est donc évaluée. L'évaluation de la latence de transmission et de restitution est utilisée pour assurer une restitution synchronisée par le système de restitution audio multicanaux.

Cette latence « globale » est liée à la transmission, mais aussi à la restitution du signal audio réparti et donc à l'implémentation logicielle/matérielle de l'enceinte Bluetooth (décodage et *buffering*)*.*

La latence de transmission est sensiblement équivalente quel que soit le codec A2DP, alors que la latence globale de transmission et de restitution est grandement influencée par le choix du codec A2DP.

Dans un premier mode de réalisation, la latence de transmission et de restitution est évaluée en fonction d'un codec utilisé pour transmettre le signal audio réparti.

Il est en effet possible, en fonction de la complexité et de la latence de codage/décodage du codec employé, d'obtenir des approximations attendues de la latence de transmission et de restitution pour une liaison Bluetooth. Par exemple :
- codec AptX : 40ms ;
- codec SBC : 150ms ;
- codec AAC : 400ms.

En l'absence d'autre information, il est possible d'utiliser ces valeurs comme valeurs par défaut. Ces valeurs seront utilisées telles quelles dans le cas où les enceintes Bluetooth sont individuellement associées à l'enceinte connectée. Ces valeurs seront doublées dans le cas où une paire d'enceintes Bluetooth est associée à l'enceinte connectée, car deux transmissions Bluetooth successives sont employées (ce cas correspond par exemple aux figures 6 et 9) .

Dans un deuxième mode de réalisation, l'enceinte connectée met en œuvre un procédé de calibration faisant intervenir un utilisateur pour évaluer la latence de transmission et de restitution.

Le procédé de calibration est lancé par l'utilisateur. Le procédé de calibration est potentiellement obligatoire à la première utilisation du système de restitution audio multicanaux. Les étapes du procédé de calibration sont visibles sur la figure 10.

Une valeur de décalage temporel est appliquée par défaut sur la sortie Bluetooth de l'enceinte connectée (étape E0).

Le procédé de calibration débute alors (étape E1).

Un premier son de courte durée est joué sur les voies audio avant, c'est-à-dire par l'enceinte connectée (ou par les enceintes connectées) : étape E2. Un deuxième son de courte durée, de fréquence différente, est joué sur les voies audio arrière, c'est-à-dire par l'enceinte Bluetooth (ou par les enceintes Bluetooth) : étape E3. Ici, par exemple, le premier son est plus aigu que le deuxième son. Le premier son et le deuxième son sont émis simultanément.

L'utilisateur indique si le son le plus aigu (c'est-à-dire le premier son) est entendu avant, simultanément, ou après l'autre son (le deuxième son) : étape E4.

Si le premier son et le deuxième son sont synchronisés et sont donc entendus simultanément par l'utilisateur, le procédé de calibration s'achève : étape E5.

Si le premier son est en avance, l'enceinte connectée augmente le décalage temporel appliqué sur la sortie Bluetooth de l'enceinte connectée qui est reliée aux enceintes Bluetooth. Le procédé de calibration revient alors à l'étape E1, et l'enceinte connectée réémet le premier son et le deuxième son (avec le décalage temporel ajusté) : étape E6.

Si le deuxième son est en avance, l'enceinte connectée diminue le décalage temporel appliqué sur la sortie Bluetooth de l'enceinte connectée. Le procédé de calibration revient alors à l'étape E1, et l'enceinte connectée réémet le premier son et le deuxième son (avec le décalage temporel ajusté) : étape E7.

Dans un troisième mode de réalisation, la latence de transmission et de restitution est évaluée en fonction du modèle de l'enceinte externe.

On utilise une table de latences comprenant des valeurs de latence de transmission et de restitution de différents modèles d'enceintes Bluetooth. La table de latences est stockée dans l'enceinte connectée ou bien peut être obtenue par le réseau, par exemple depuis un serveur centralisé externe. Cette solution a l'avantage de ne pas nécessiter d'intervention de la part de l'utilisateur, et d'avoir un bon niveau de précision.

Avantageusement, la table de latences pourra être complétée par les valeurs de latence de transmission et de restitution obtenues en conditions réelles (et évaluées par les autres méthodes qui ont été décrites) pour les différents modèles d'enceintes Bluetooth, permettant ainsi au système de s'enrichir de nouvelles valeurs au fur et à mesure du déploiement chez les utilisateurs.

Un quatrième mode de réalisation utilise un microphone intégré dans l'enceinte connectée, ou bien relié à l'enceinte connectée. Cette méthode va permettre soit de calculer la latence de transmission et de restitution, soit de raffiner les valeurs obtenues par les autres méthodes qui viennent d'être décrites.

L'évaluation de la latence de transmission et de restitution est réalisée de la manière suivante.

Dans une phase d'initialisation, l'enceinte connectée transmet via son interface Bluetooth à une enceinte Bluetooth appairée un signal audio de test.

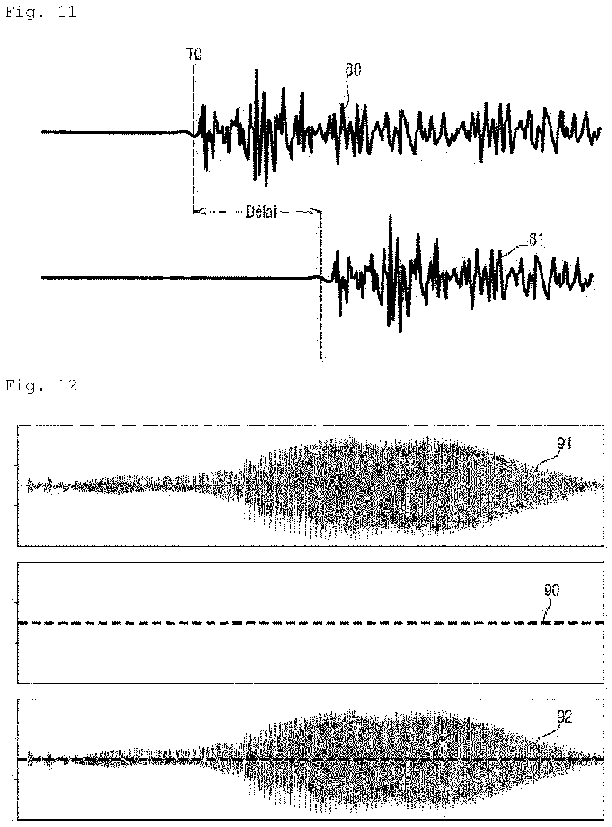

Un exemple de signal audio de test 80 est visible sur la figure 11. L'enceinte connectée considère que le signal audio de test 80 (connu) est envoyé au temps T0. L'enceinte connectée commande l'enceinte Bluetooth appairée pour que celle-ci émette un signal sonore de test émis produit à partir du signal audio de test 80. L'enceinte connectée acquiert alors via le microphone un signal sonore de test reçu 81, et estime la latence à partir du signal audio de test 80 et du signal sonore de test reçu 81. La latence de transmission et de restitution est évaluée en calculant une corrélation croisée entre le signal audio de test 80 et le signal sonore de test reçu 81. Le pic de la corrélation croisée correspond à la latence réelle.

La corrélation croisée a l'avantage de s'accommoder de la superposition d'autres signaux au signal recherché (perturbations, bruits, musique, etc.).

On s'intéresse maintenant plus en détail au signal audio de test 80 et donc au signal sonore de test émis.

Le signal sonore de test émis peut être un signal de test dédié à l'estimation de la latence et « isolé », c'est-à-dire transmis sans être accompagné d'un autre signal sonore. Le signal sonore de test émis comprend par exemple un « *jingle ».*

Le signal sonore de test émis peut aussi appartenir au signal sonore utile d'un contenu audio/vidéo, par exemple d'un film, dont la restitution est commandée par un utilisateur. Le signal sonore de test émis comprend ainsi des sons quelconques du film.

Le signal sonore de test émis peut aussi être superposé au signal sonore utile du contenu audio/vidéo. Cette solution est préférable car plus fiable et plus précise que la précédente.

Le signal sonore de test émis n'est pas nécessairement audible mais peut être inaudible pour l'être humain - et donc parfaitement adapté à être superposé au signal sonore utile d'un contenu audio/vidéo. Le signal sonore de test émis peut par exemple avoir un niveau d'intensité situé sous le seuil absolu d'audition humaine, ou bien être masqué par le signal sonore utile du contenu audio/vidéo.

Le calcul de la corrélation croisée est réalisé de la manière suivante.

La corrélation croisée est calculée sur un intervalle de temps supérieur au plus grand décalage prévisible (par exemple 5s).

Sur cet intervalle de temps, la valeur maximale obtenue de la corrélation croisée entre le signal audio de test et le signal sonore de test reçu correspond à la latence de transmission et de restitution.

Le calcul de corrélation croisée sur un grand intervalle (par rapport à la taille de l'échantillon) est coûteux en calculs. On pourra si besoin réduire le nombre de calculs nécessaires en réalisant une série hiérarchique de calculs de corrélation croisée.

On réduit ainsi une fréquence d'échantillonnage du signal audio de test (utilisé pour le calcul de corrélation croisée) et du signal sonore de test reçu pour calculer une première approximation de la latence. On pourra par exemple réduire la granularité de l'échantillonnage à 5ms, ce qui revient à ré-échantillonner les signaux en utilisant une fréquence de 200Hz). Ceci peut être réalisé en sous-échantillonnant le signal sonore de test reçu capté par le microphone, ainsi que le signal audio de test (les deux signaux doivent avoir la même fréquence d'échantillonnage pour effectuer le calcul).

Il convient d'assurer que le signal audio de test et le signal sonore de test reçu sont toujours identifiables à cette fréquence d'échantillonnage : les motifs du signal audio de test doivent avoir une durée qui soit au moins égale à deux fois la fréquence d'échantillonnage (par exemple 10ms pour une fréquence de 200Hz). On choisira de préférence une durée des motifs significativement plus longue, par exemple égale à 100ms.

Puis, on augmente la fréquence d'échantillonnage et on recalcule la latence en ne gardant qu'une fenêtre temporelle de durée réduite centrée autour de la première approximation de la latence. On pourra procéder à un ou plusieurs raffinements successifs.

Il est avantageux que la précision soit de la valeur d'un échantillon sonore restitué. Cela signifie que si la lecture est effectuée à 48kHz en mode nominal, alors la latence doit être calculée selon une granularité de 48kHz.

Lorsque le signal sonore de test émis est superposé au signal sonore utile d'un contenu audio/vidéo, ou dans le cas d'une mesure simultanée du décalage de plusieurs sorties, il est possible d'améliorer la précision de la mesure de la latence de la manière suivante.

On émet un signal combiné émis, qui est la superposition du signal sonore utile et du signal sonore de test émis. On reçoit alors un signal combiné reçu, qui est donc composé du signal sonore de test reçu et du signal sonore utile reçu.

Dans le cas où la corrélation croisée est calculée dans le domaine temporel, on utilisera de préférence un filtre fréquentiel passe-bande sur le signal combiné reçu capté par le microphone afin d'isoler le signal sonore de test reçu par rapport au signal sonore utile reçu, et ainsi améliorer la précision du calcul de corrélation croisée entre le signal audio de test et le signal combiné reçu.

On pourra alternativement calculer la corrélation croisée dans le domaine fréquentiel. On transforme tout d'abord les représentations temporelles du signal audio de test et du signal sonore de test reçu en représentations fréquentielles (par le biais d'une transformée appropriée, telle qu'une FFT), puis on calcule la corrélation croisée uniquement sur la bande de fréquence comportant le signal sonore de test reçu à identifier. Ceci permet de s'affranchir des erreurs de mesure pouvant résulter des autres fréquences.

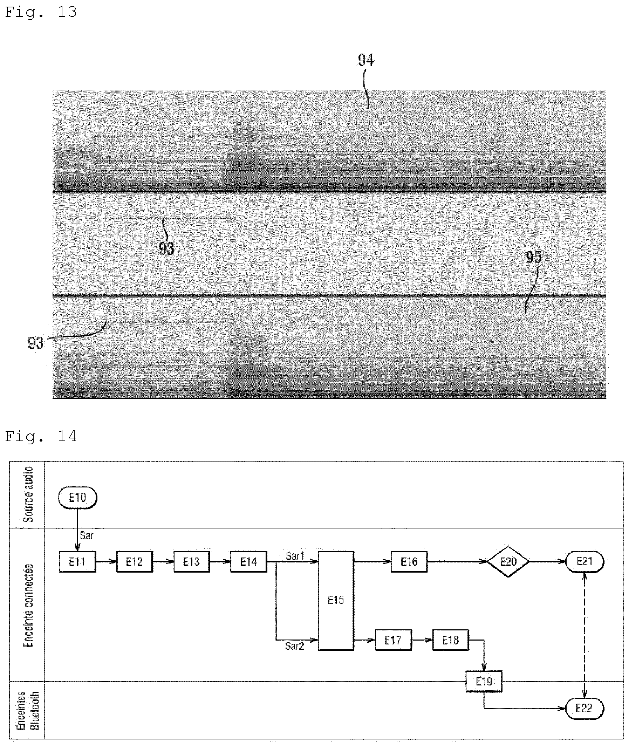

On illustre, en référence aux figures 12 et 13, une amélioration de la détection qui est constatée lorsque celle-ci est réalisée dans le domaine fréquentiel.

Sur la figure 12, les signaux sont représentés dans le domaine temporel.

Le signal sonore de test émis 90 est superposé à un signal sonore utile 91 pour former un signal combiné émis 92. Le signal sonore de test émis 90 est un signal de faible amplitude à 15kHz et est inaudible. Le signal sonore de test émis 90 est presque invisible dans cette représentation, du fait de sa faible amplitude. On constate que le signal combiné émis 92 est très similaire au signal sonore utile 91. En conséquence, l'évaluation du délai par le calcul de corrélation croisée entre le signal audio de test et le signal combiné reçu (issu du signal combiné émis 92) ne sera pas efficace.

Sur la figure 13, les signaux sont représentés dans le domaine fréquentiel, par spectrogramme allant de 0 à 20kHz. A nouveau, le signal sonore de test émis 93 est superposé à un signal sonore utile 94.

Le signal sonore de test émis 93 est un signal de faible amplitude à 15kHz et est inaudible. Le signal sonore de test émis 93 est facilement visible dans cette représentation fréquentielle.

Le signal sonore de test émis 93 est aussi facilement visible dans la représentation fréquentielle du signal combiné émis 95. L'évaluation du délai par le calcul de corrélation dans le domaine fréquentiel sera donc plus efficace, et le risque d'erreurs plus faible. Le risque d'erreurs sera encore plus réduit en ne conservant qu'une bande de fréquence comprenant le signal sonore de test émis, par exemple ici la bande allant de 14500Hz à 15500Hz.

On note que le signal sonore de test émis qui est utilisé dans cet exemple est simplifié, pour faciliter l'illustration de l'invention. En conditions réelles, on utilisera avantageusement un signal sonore de test émis plus complexe, combinant par exemple différentes périodes d'émission de fréquences alternées avec des périodes de silence.

Lors de la lecture audio, l'horloge cible d'un récepteur audio Bluetooth, c'est-à-dire ici d'une enceinte Bluetooth, est asservie sur l'horloge source de l'émetteur, considéré comme maître, l'émetteur étant ici l'enceinte connectée. Il n'y a donc à priori pas de raison que l'horloge source et l'horloge cible dérivent l'une par rapport à l'autre lors de la lecture audio.

Cependant, si deux enceintes Bluetooth sont chacune appairées avec une enceinte connectée différente (au lieu donc d'être appairées avec une même enceinte connectée), il est possible qu'une dérive se produise entre les deux horloges sources ce qui crée un décalage entre les horloges cibles des deux enceintes Bluetooth.

Ceci peut être détecté par l'enceinte connectée lors de la lecture, en utilisant le microphone de façon similaire à la détection initiale de la latence de transmission et de restitution, en employant des signaux sonores de test émis possiblement inaudibles pour un humain, superposés au signal sonore utile à reproduire par les enceintes Bluetooth appairées à l'enceinte connectée.

Le signal sonore de test émis pourra être différent entre les deux enceintes Bluetooth, ou bien être identique. Dans ce dernier cas, la détection est effectuée de manière alternative entre les enceintes arrière gauche et droite, le signal audio de test n'étant envoyé que sur le canal à tester.

Afin d'améliorer la cohérence du rendu sonore global, l'enceinte connectée pourra ajuster le volume du ou des signaux audio répartis qui sont alloués et transmis aux enceintes Bluetooth, mais aussi du signal audio réparti alloué à ladite enceinte connectée et du ou des signaux audio répartis transmis à une ou des autres enceintes connectées.

En effet, il est peu probable que les gains d'enceintes de modèles différents soient identiques, et une restitution telle quelle produirait alors une différence de volume perçu entre les différentes enceintes Bluetooth. L'enceinte connectée ajustera alors le gain d'une ou de plusieurs voies audio intégrant les enceintes Bluetooth, afin de compenser cette différence de gain. Les valeurs des ajustements à appliquer pourront être obtenues par différents moyens, par exemple renseignées par l'utilisateur (via une interface de configuration). Les valeurs peuvent aussi être obtenues via une table de correspondance entre des modèles d'enceintes connues et des gains.

L'enceinte connectée peut aussi appliquer un ajustement fréquentiel (de type égalisation fréquentielle) sur une ou de plusieurs voies audio intégrant les enceintes Bluetooth, afin d'améliorer la cohérence sonore entre l'enceinte connectées et les enceintes Bluetooth. Les valeurs peuvent être obtenues selon différents moyens, tels que ceux décrits pour le point précédent.

On note que, bien qu'il soit préférable, pour avoir une qualité sonore optimale, que les deux enceintes Bluetooth appairées avec l'enceinte connectée soient de modèles identiques, le système audio pourrait également fonctionner si les deux enceintes Bluetooth sont de modèles différents.

Dans ce cas, l'enceinte connectée peut optionnellement adapter une égalisation fréquentielle différente aux deux voies audio intégrant les enceintes Bluetooth, afin de compenser leur différence de réponse fréquentielle.

Par ailleurs, la gestion d'enceintes Bluetooth appairées entraîne une augmentation de la latence de lecture de l'enceinte connectée par rapport à une configuration dans laquelle l'enceinte connectée serait utilisée seule. Avantageusement, l'enceinte connectée évalue une valeur de la latence de lecture et transmet la valeur de la latence de lecture au boîtier décodeur.

Cela pourrait être réalisé par différents moyens, tels que par exemple une API disponible sur l'enceinte connectée, ou bien un message envoyé par l'enceinte connectée à la source sonre souhaitant lui envoyer un flux sonore (ici le boîtier décodeur).

On a décrit ici que la ou les enceintes connectées selon l'invention restituent les voies audio avant du système de restitution audio alors que la ou les enceintes Bluetooth restituent les voies audio arrière. Il est cependant bien sûr possible de mettre en œuvre une autre répartition spatiale des voies audio.

Par exemple, les enceintes Bluetooth pourraient restituer les voies audio avant et un couple d'enceintes connectées les voies audio arrière, ou bien une unique enceinte Bluetooth pourrait restituer la voie audio avant centrale tandis que deux enceintes connectées restituent les autres voies audio.

De même, l'invention n'est pas limitée à la gestion et à la restitution de sons multicanaux. L'invention peut être mise en œuvre pour une restitution stéréo (par exemple un couple d'enceintes connectées et une enceinte Bluetooth restituent la voie audio gauche tandis qu'un autre couple d'enceintes connectées et une enceinte Bluetooth restituent la voie audio droite). Une restitution monophonique peut aussi être envisagée.

Il est aussi possible de créer une spatialisation virtuelle (par exemple en appliquant des effets de type reverb, chorus) à partir du signal audio entrant, indépendamment du nombre de canaux de celui-ci.

Le système peut également créer de nouveaux canaux à destination des enceintes Bluetooth à partir des canaux reçus, mais en ayant une configuration spatiale cible différente de la configuration du signal audio d'entrée, par le biais d'une opération de recalcul des canaux.

Ces configurations sont des exemples, illustrant le fait que l'invention peut s'appliquer à diverses configurations de canaux source et cibles.

La figure 14 permet de synthétiser le procédé de restitution audio qui vient d'être décrit.

Le boîtier décodeur transmet un signal audio d'entrée Sae, qui est en l'occurrence un flux audio multicanaux (étape E10) .

L'enceinte connectée reçoit le signal audio d'entrée Sae via son interface Wi-Fi (étape E11). Le module décodeur décode le signal audio d'entrée (étape E12). Le module séparateur sépare les signaux audio répartis (étape E13), qui sont alloués aux enceintes Bluetooth appairées avec l'enceinte connectée.

Une nouvelle répartition spatiale des voies audio est éventuellement réalisée (étape E14).

On obtient alors un premier signal audio réparti Sar1 alloué aux voies audio avant (c'est-à-dire destiné à être restitué par l'enceinte connecté) et un deuxième signal audio réparti Sar2 alloué aux voies audio arrière (c'est-à-dire destiné à être restitué par les enceintes Bluetooth)

Le gain du premier signal audio réparti Sar1 et le gain du deuxième signal audio réparti Sar2 sont potentiellement ajustés (étape E15).

Le premier signal audio réparti Sar1 est mis en mémoire tampon (étape E16).

Une égalisation fréquentielle est éventuellement mise en œuvre sur le deuxième signal audio réparti Sar2 (étape E17). Le deuxième signal audio réparti Sar2 est encodé selon le codec AD2P (étape E18).

Le deuxième signal audio réparti Sar2 est alors transmis aux enceintes Bluetooth (étape E19).

L'enceinte connectée évalue le temps écoulé après le début de la transmission du deuxième signal audio réparti (étape E20) et, lorsque le temps écoulé est égal à la latence de transmission et de restitution évaluée des enceintes Bluetooth, l'enceinte connectée joue un premier signal sonore correspondant au premier signal audio réparti (étape E21) .

Les enceintes Bluetooth jouent quant à elles un deuxième signal sonore correspondant au deuxième signal audio réparti (étape E22) .

Le premier signal sonore et le deuxième signal sonore sont parfaitement synchronisés.

Bien entendu, l'invention n'est pas limitée aux modes de réalisation décrits mais englobe toute variante entrant dans le champ de l'invention telle que définie par les revendications.

## Revendications

1. Enceinte connectée (1) comportant :
- une interface LAN (2) ;
- une interface WPAN (3) ;
- des moyens d'appairage (5) agencés pour appairer l'enceinte connectée avec une ou des enceintes externes (6) munies chacune d'une interface WPAN externe (7) ;
- des moyens de traitement (8) agencés pour acquérir via l'interface LAN un signal audio d'entrée provenant d'une source audio (15), pour produire à partir du signal audio d'entrée au moins un signal audio réparti, pour allouer chaque signal audio réparti à l'une des enceintes externes (6) appairées avec l'enceinte connectée, et pour transmettre à chaque enceinte externe via l'interface WPAN (3) de l'enceinte connectée (1) et l'interface WPAN externe (7) de ladite enceinte externe (6) le signal audio réparti qui est alloué à ladite enceinte externe (6), de sorte que l'enceinte connectée (1) et les enceintes externes (6) forment un système de restitution audio multicanaux,
l'enceinte connectée étant en outre agencée pour évaluer une latence de transmission et de restitution résultant de la transmission via l'interface WPAN (3) d'un signal audio réparti à une enceinte externe, et de la restitution du signal audio réparti par l'enceinte externe,
l'enceinte connectée étant agencée pour compenser la latence de transmission et de restitution pour assurer une restitution synchronisée par le système de restitution audio multicanaux,
l'enceinte connectée étant agencée pour évaluer la latence de transmission et de restitution en fonction d'un codec utilisé pour transmettre le signal audio réparti, l'enceinte connectée étant agencée pour utiliser comme valeur par défaut, pour la latence de transmission et de restitution, une latence de codage/décodage dudit codec utilisé ;
ou
l'enceinte connectée étant agencée pour évaluer la latence de transmission et de restitution par un procédé de calibration faisant intervenir un utilisateur, le procédé de calibration comprenant les étapes :
- de faire émettre simultanément un premier son par l'enceinte connectée en appliquant un décalage temporel sur une sortie de l'enceinte connectée reliée à l'enceinte externe, et un deuxième son de fréquence différente par l'enceinte externe ;
- d'ajuster le décalage temporel jusqu'à ce que l'utilisateur indique qu'il entend simultanément le premier son et le deuxième son ;
- lorsque la valeur du décalage temporel est telle que l'utilisateur entend simultanément le premier son et le deuxième son, de conférer ladite valeur à la latence de transmission et de restitution ;
ou
l'enceinte connectée étant agencée pour évaluer la latence de transmission et de restitution en fonction d'un modèle de l'enceinte externe, l'enceinte connectée étant agencée pour utiliser une valeur de latence de transmission et de restitution associée audit modèle de l'enceinte externe et comprise dans une table de latence stockée dans l'enceinte connectée ou obtenue via un réseau auquel est connectée l'enceinte connectée ;
ou
l'enceinte connectée intégrant ou étant reliée à un microphone, l'enceinte connectée étant agencée pour transmettre via l'interface WPAN un signal audio de test (80) à l'enceinte externe, pour commander l'enceinte externe pour que celle-ci émette un signal sonore de test émis produit à partir du signal audio de test, pour acquérir via le microphone un signal sonore de test reçu (81), pour calculer dans le domaine fréquentiel une corrélation croisée entre le signal audio de test et le signal sonore de test reçu, la latence de transmission et de restitution correspondant à un pic de la corrélation croisée.

2. Enceinte connectée selon la revendication 1, l'enceinte connectée (30 ; 61) pouvant être appairée avec au moins deux enceintes externes (31, 32 ; 63, 64) individuellement, l'enceinte connectée étant agencée pour transmettre directement à chaque enceinte externe le signal audio réparti qui est alloué à ladite enceinte externe (31, 32 ; 63, 64).

3. Enceinte connectée selon la revendication 1, l'enceinte connectée (40 ; 71) pouvant être appairée avec une première enceinte externe (41 ; 73) qui est elle-même appairée avec une deuxième enceinte externe (42 ; 74), l'enceinte connectée (40 ; 71) étant agencée pour transmettre directement à la première enceinte externe (41 ; 73) un premier signal audio réparti alloué à la première enceinte externe et un deuxième signal audio réparti alloué à la deuxième enceinte externe.

4. Enceinte connectée selon l'une des revendications précédentes, l'enceinte connectée étant une enceinte multicanaux (30 ; 40).

5. Enceinte connectée selon l'une des revendications 1 à 3, l'enceinte connectée étant une enceinte monocanal (51 ; 61) agencée pour être connectée avec une autre enceinte connectée (52 ; 62) via l'interface LAN.

6. Enceinte connectée selon la revendication 1, l'enceinte connectée étant en outre agencée pour calculer dans le domaine temporel une corrélation croisée entre le signal audio de test et le signal sonore de test reçu, et, pour cela, pour :
- réduire une fréquence d'échantillonnage du signal audio de test et du signal sonore de test reçu,
- calculer une première approximation de la latence de transmission et de restitution,
- puis augmenter la fréquence d'échantillonnage et recalculer la latence de transmission et de restitution en ne gardant qu'une fenêtre temporelle de durée réduite centrée autour de la première approximation de la latence de transmission et de restitution.

7. Enceinte connectée selon la revendication 1, dans laquelle le signal sonore de test émis est superposé à un signal sonore utile d'un contenu audio restitué.

8. Enceinte connectée selon la revendication 1, dans laquelle le signal sonore de test émis est un signal normalement inaudible pour un être humain.

9. Enceinte connectée selon l'une des revendications précédentes, l'enceinte connectée étant agencée pour ajuster un gain et/ou pour réaliser un ajustement fréquentiel sur au moins une voie audio intégrant une enceinte externe.

10. Enceinte connectée selon l'une des revendications précédentes, l'enceinte connectée étant agencée pour évaluer une valeur d'une latence de lecture de l'enceinte connectée, et pour transmettre la valeur de la latence de lecture à la source audio.

11. Enceinte connectée selon l'une des revendications précédentes, dans laquelle les moyens d'appairage mettent en œuvre un appairage selon le profil Bluetooth A2DP.

12. Enceinte connectée selon l'une des revendications précédentes, dans laquelle les moyens d'appairage comportent un bouton physique.

13. Enceinte connectée selon l'une des revendications 1 à 11, dans laquelle les moyens d'appairage comportent un module d'appairage agencé pour coopérer avec une interface de configuration fournie par un API ou par une page WEB de configuration.

14. Enceinte connectée selon l'une des revendications précédentes, dans laquelle l'interface LAN est une interface Wi-Fi.

15. Enceinte connectée selon l'une des revendications précédentes, dans laquelle l'interface LAN est une interface Ethernet.

16. Enceinte connectée selon l'une des revendications précédentes, dans laquelle l'interface WPAN est une interface Bluetooth.

17. Procédé de restitution audio mis en œuvre dans une enceinte connectée selon l'une des revendications précédentes, comprenant les étapes de :
- appairer l'enceinte connectée (1) avec une ou des enceintes externes (6) munies chacune d'une interface WPAN externe (7) ;
- acquérir un signal audio d'entrée d'une source audio via l'interface LAN ;
- produire à partir du signal audio d'entrée au moins un signal audio réparti ;
- allouer chaque signal audio réparti à l'une des enceintes externes (6) appairées avec l'enceinte connectée ;
- transmettre à chaque enceinte externe via l'interface WPAN (3) de l'enceinte connectée (1) et l'interface WPAN externe (7) de ladite enceinte externe (6) le signal audio réparti qui est alloué à ladite enceinte externe (6), de sorte que l'enceinte connectée (1) et les enceintes externes (6) forment un système de restitution audio multicanaux,
- évaluer une latence de transmission et de restitution résultant de la transmission via l'interface WPAN (3) d'un signal audio réparti à une enceinte externe, et de la restitution du signal audio réparti par l'enceinte externe,
- compenser la latence de transmission et de restitution pour assurer une restitution synchronisée par le système de restitution audio multicanaux ;
l'évaluation de la latence de transmission et de restitution étant réalisée en fonction d'un codec utilisé pour transmettre le signal audio réparti, l'évaluation comprenant l'étape d'utiliser comme valeur par défaut, pour la latence de transmission et de restitution, une latence de codage/décodage dudit codec utilisé ;
ou
l'évaluation de la latence de transmission et de restitution étant réalisée par un procédé de calibration faisant intervenir un utilisateur, le procédé de calibration comprenant les étapes :
- de faire émettre simultanément un premier son par l'enceinte connectée en appliquant un décalage temporel sur une sortie de l'enceinte connectée reliée à l'enceinte externe, et un deuxième son de fréquence différente par l'enceinte externe ;
- d'ajuster le décalage temporel jusqu'à ce que l'utilisateur indique qu'il entend simultanément le premier son et le deuxième son ;
- lorsque la valeur du décalage temporel est telle que l'utilisateur entend simultanément le premier son et le deuxième son, de conférer ladite valeur à la latence de transmission et de restitution ;
ou
l'évaluation de la latence de transmission et de restitution étant réalisée en fonction d'un modèle de l'enceinte externe, l'évaluation comprenant les étapes d'utiliser une valeur de latence de transmission et de restitution associé audit modèle de l'enceinte externe et comprise dans une table de latence stockée dans l'enceinte connectée ou obtenue via un réseau auquel est connectée l'enceinte connectée ;
ou
l'enceinte connectée intégrant ou étant reliée à un microphone, l'évaluation de la latence comprenant les étapes de transmettre via l'interface WPAN un signal audio de test (80) à l'enceinte externe, de commander l'enceinte externe pour que celle-ci émette un signal sonore de test émis produit à partir du signal audio de test, d'acquérir via le microphone un signal sonore de test reçu (81), de calculer dans le domaine fréquentiel une corrélation croisée entre le signal audio de test et le signal sonore de test reçu, la latence de transmission et de restitution correspondant à un pic de la corrélation croisée.

18. Programme d'ordinateur comprenant des instructions qui conduisent l'enceinte connectée selon l'une des revendications 1 à 16 à exécuter les étapes du procédé de restitution audio selon la revendication 17.

19. Support d'enregistrement lisible par ordinateur, sur lequel est enregistré le programme d'ordinateur selon la revendication 18.

## Patentansprüche

1. Vernetzter Lautsprecher (1), umfassend:
- eine LAN-Schnittstelle (2);
- eine WPAN-Schnittstelle (3);
- Paarungsmittel (5), die ausgebildet sind, den vernetzten Lautsprecher mit einem oder mehreren externen Lautsprechern (6) zu paaren, die jeweils mit einer externen WPAN-Schnittstelle (7) verbunden sind;
- Verarbeitungsmittel (8), die ausgebildet sind, über die LAN-Schnittstelle ein Eingangsaudiosignal zu erfassen, das von einer Audioquelle (15) stammt, anhand des Eingangsaudiosignals mindestens ein verteiltes Audiosignal zu erzeugen, jedes verteilte Audiosignal einem der externen Lautsprecher (6), die mit dem vernetzten Lautsprecher gepaart sind, zuzuweisen und an jeden externen Lautsprecher über die WPAN-Schnittstelle (3) des vernetzten Lautsprechers (1) und die externe WPAN-Schnittstelle (7) des genannten externen Lautsprechers (6) das verteilte Audiosignal zu übertragen, das dem genannten externen Lautsprecher (6) zugewiesen ist, sodass der vernetzte Lautsprecher (1) und die externen Lautsprecher (6) ein Mehrkanal-Audiowiedergabesystem bilden,
wobei der vernetzte Lautsprecher ferner ausgebildet ist, eine Übertragungs- und Wiedergabelatenz zu evaluieren, die aus der Übertragung eines verteilten Audiosignals an einen externen Lautsprecher über die WPAN-Schnittstelle (3) und aus der Wiedergabe des verteilten Audiosignals durch den externen Lautsprecher resultiert,
wobei der vernetzte Lautsprecher ausgebildet ist, die Übertragungs- und Wiedergabelatenz zu kompensieren, um eine synchronisierte Wiedergabe durch das Mehrkanal-Audiowiedergabesystem zu gewährleisten, wobei der vernetzte Lautsprecher ausgebildet ist, die Übertragungs- und Wiedergabelatenz in Abhängigkeit von einem Codec zu evaluieren, der verwendet wird, um das verteilte Audiosignal zu übertragen, wobei der vernetzte Lautsprecher ausgebildet ist, als Standardwert für die Übertragungs- und Wiedergabelatenz eine Kodierungs-/Dekodierungslatenz des genannten verwendeten Codecs zu verwenden;
oder
wobei der vernetzte Lautsprecher ausgebildet ist, die Übertragungs- und Wiedergabelatenz durch ein Kalibrierungsverfahren zu evaluieren, das einen Benutzer einbezieht, wobei das Kalibrierungsverfahren die Schritte umfasst:
- Veranlassen, dass gleichzeitig ein erster Ton durch den vernetzten Lautsprecher durch Anwendung eines Zeitversatzes an einem Ausgang des vernetzten Lautsprechers, der mit dem externen Lautsprecher verbunden ist, und ein zweiter Ton mit unterschiedlicher Frequenz durch den externen Lautsprecher gesendet wird;
- Anpassen des Zeitversatzes, bis der Benutzer angibt, dass er den ersten Ton und den zweiten Ton gleichzeitig hört;
- wenn der Wert des Zeitversatzes derart ist, dass der Benutzer den ersten Ton und den zweiten Ton gleichzeitig hört, Zuweisen des genannten Werts an die Übertragungs- und Wiedergabelatenz;
oder
wobei der vernetzte Lautsprecher ausgebildet ist, die Übertragungs- und Wiedergabelatenz in Abhängigkeit von einem Modell des externen Lautsprechers zu evaluieren, wobei der vernetzte Lautsprecher ausgebildet ist, einen Übertragungs- und Wiedergabelatenzwert zu verwenden, der mit dem Modell des externen Lautsprechers verbunden und in einer Latenztabelle enthalten ist, die in dem vernetzten Lautsprecher gespeichert ist oder über ein Netzwerk erhalten wird, an das der vernetzte Lautsprecher angeschlossen ist;
oder
wobei der vernetzte Lautsprecher ein Mikrofon enthält oder mit einem Mikrofon verbunden ist, wobei der vernetzte Lautsprecher ausgebildet ist, über die WPAN-Schnittstelle ein Testaudiosignal (80) an den externen Lautsprecher zu übertragen, den externen Lautsprecher zu steuern, damit dieser ein gesendetes Testtonsignal sendet, das anhand des Testaudiosignals erzeugt wird, über das Mikrofon ein empfangenes Testtonsignal (81) zu erfassen, in dem Frequenzbereich eine Kreuzkorrelation zwischen dem Testaudiosignal und dem empfangenen Testtonsignal zu berechnen, wobei die Übertragungs- und Wiedergabelatenz einem Spitzenwert der Kreuzkorrelation entspricht.

2. Vernetzter Lautsprecher nach Anspruch 1, wobei der vernetzte Lautsprecher (30; 61) mit mindestens zwei externen Lautsprechern (31; 32; 63, 64) einzeln gepaart werden kann, wobei der vernetzte Lautsprecher ausgebildet ist, an jeden externen Lautsprecher das verteilte Audiosignal, das dem genannten externen Lautsprecher (31, 32; 63, 64) zugewiesen ist, direkt zu übertragen.

3. Vernetzter Lautsprecher nach Anspruch 1, wobei der vernetzte Lautsprecher (40; 71) mit einem ersten externen Lautsprecher (41; 73) gepaart werden kann, der selbst mit einem zweiten externen Lautsprecher (42; 74) gepaart ist, wobei der vernetzte Lautsprecher (40; 71) ausgebildet ist, ein erstes verteiltes Audiosignal, das dem ersten externen Lautsprecher zugewiesen ist, und ein zweites verteiltes Audiosignal, das dem zweiten externen Lautsprecher zugewiesen ist, direkt an den ersten externen Lautsprecher (41; 73) zu übertragen.

4. Vernetzter Lautsprecher nach einem der vorhergehenden Ansprüche, wobei der vernetzte Lautsprecher ein Mehrkanal-Lautsprecher (30; 40) ist.

5. Vernetzter Lautsprecher nach einem der Ansprüche 1 bis 3, wobei der vernetzte Lautsprecher ein Einkanal-Lautsprecher (51; 61) ist, der ausgebildet ist, mit einem anderen vernetzten Lautsprecher (52; 62) über die LAN-Schnittstelle verbunden zu werden.

6. Vernetzter Lautsprecher nach Anspruch 1, wobei der vernetzte Lautsprecher ferner ausgebildet ist, in dem Zeitbereich eine Kreuzkorrelation zwischen dem Testaudiosignal und dem empfangenen Testtonsignal zu berechnen, und hierfür:
- eine Abtastfrequenz des Testaudiosignals und des empfangenen Testtonsignals zu verringern,
- eine erste Annäherung der Übertagungs- und Wiedergabelatenz zu berechnen,
- und dann die Abtastfrequenz zu erhöhen und die Übertragungs- und Wiedergabelatenz erneut zu berechnen, indem nur ein Zeitfenster reduzierter Dauer, das um die erste Annäherung der Übertragungs- und Wiedergabelatenz zentriert ist, beibehalten wird.

7. Vernetzter Lautsprecher nach Anspruch 1, bei dem das gesendete Testtonsignal einem nützlichen Tonsignal eines wiedergegebenen Audioinhalts überlagert wird.

8. Vernetzter Lautsprecher nach Anspruch 1, bei dem das gesendete Testtonsignal ein Signal ist, das normalerweise für einen Menschen nicht hörbar ist.

9. Vernetzter Lautsprecher nach einem der vorhergehenden Ansprüche, wobei der vernetzte Lautsprecher ausgebildet ist, eine Verstärkung anzupassen und/oder eine Frequenzanpassung auf mindestens einem Audiokanal durchzuführen, der einen externen Lautsprecher enthält.

10. Vernetzter Lautsprecher nach einem der vorhergehenden Ansprüche, wobei der vernetzte Lautsprecher ausgebildet ist, einen Wert einer Leselatenz des vernetzten Lautsprechers zu evaluieren und den Wert der Leselatenz an die Audioquelle zu übertragen.

11. Vernetzter Lautsprecher nach einem der vorhergehenden Ansprüche, bei dem die Paarungsmittel eine Paarung nach dem A2DP-Bluetooth-Profil implementieren.

12. Vernetzter Lautsprecher nach einem der vorhergehenden Ansprüche, bei dem die Paarungsmittel eine physische Taste umfassen.

13. Vernetzter Lautsprecher nach einem der Ansprüche 1 bis 11, bei dem die Paarungsmittel ein Paarungsmodul umfassen, das ausgebildet ist, mit einer Konfigurationsschnittstelle zusammenzuwirken, die durch eine API oder durch eine Konfigurationswebseite bereitgestellt wird.

14. Vernetzter Lautsprecher nach einem der vorhergehenden Ansprüche, bei dem die LAN-Schnittstelle eine Wi-Fi-Schnittstelle ist.

15. Vernetzter Lautsprecher nach einem der vorhergehenden Ansprüche, bei dem die LAN-Schnittstelle eine Ethernet-Schnittstelle ist.

16. Vernetzter Lautsprecher nach einem der vorhergehenden Ansprüche, bei dem die WPAN-Schnittstelle eine Bluetooth-Schnittstelle ist.

17. Audiowiedergabeverfahren, das in einem vernetzten Lautsprecher nach einem der vorhergehenden Ansprüche durchgeführt wird, umfassend die Schritte:
- Paaren des vernetzten Lautsprechers (1) mit einem oder mehreren externen Lautsprechern (6), die jeweils mit einer externen WPAN-Schnittstelle (7) versehen sind;
- Erfassen eines Eingangsaudiosignals einer Audioquelle über die LAN-Schnittstelle;
- Erzeugen mindestens eines verteilten Audiosignals aus dem Eingangsaudiosignal;
- Zuweisen jedes verteilten Audiosignals an einen der externen Lautsprecher (6), die mit dem vernetzten Lautsprecher gepaart sind;
- Übertragen des verteilten Audiosignals, das dem genannten externen Lautsprecher (6) zugewiesen ist, an jeden externen Lautsprecher über die WPAN-Schnittstelle (3) des vernetzten Lautsprechers (1) und die externe WPAN-Schnittstelle (7) des genannten externen Lautsprechers (6), derart, dass der vernetzte Lautsprecher (1) und die externen Lautsprecher (6) ein Mehrkanal-Audiowiedergabesystem bilden,
- Evaluieren einer Übertragungs- und Wiedergabelatenz, die aus der Übertragung eines verteilten Audiosignals über die WPAN-Schnittstelle (3) an einen externen Lautsprecher und aus der Wiedergabe des verteilten Audiosignals durch den externen Lautsprecher resultiert,
- Kompensieren der Übertragungs- und Wiedergabelatenz, um eine synchronisierte Wiedergabe durch das Mehrkanal-Audiowiedergabesystem sicherzustellen;
wobei die Evaluierung der Übertragungs- und Wiedergabelatenz in Abhängigkeit von einem Codec erfolgt, der zum Übertragen des verteilten Audiosignals verwendet wird, wobei die Evaluierung den Schritt des Verwendens einer Kodierungs-/Dekodierungslatenz des genannten verwendeten Codecs für die Übertragungs- und Wiedergabelatenz als Standardwert umfasst;
oder
wobei die Evaluierung der Übertragungs- und Wiedergabelatenz durch ein Kalibrierungsverfahren erfolgt, das einen Benutzer einbezieht, wobei das Kalibrierungsverfahren die Schritte umfasst:
- Veranlassen, dass gleichzeitig ein erster Ton durch den vernetzten Lautsprecher unter Anwendung eines Zeitversatzes an einem Ausgang des vernetzten Lautsprechers, der mit dem externen Lautsprecher verbunden ist, und ein zweiter Ton mit unterschiedlicher Frequenz durch den externen Lautsprecher gesendet wird;
- Anpassen des Zeitversatzes, bis der Benutzer angibt, dass er den ersten Ton und den zweiten Ton gleichzeitig hört;
- wenn der Wert des Zeitversatzes derart ist, dass der Benutzer den ersten Ton und den zweiten Ton gleichzeitig hört, Zuweisen des genannten Wertes an die Übertragungs- und Wiedergabelatenz;
oder
wobei die Evaluierung der Übertragungs- und Wiedergabelatenz in Abhängigkeit von einem Modell des externen Lautsprechers erfolgt, wobei die Evaluierung die Schritte des Verwendens eines Übertragungs- und Wiedergabelatenzwerts umfasst, der mit dem Modell des externen Lautsprechers verbunden und in einer Latenztabelle enthalten ist, die in dem vernetzten Lautsprecher gespeichert ist oder über ein Netzwerk erhalten wird, an das der vernetzte Lautsprecher angeschlossen ist;
oder
wobei der vernetzte Lautsprecher ein Mikrofon enthält oder mit einem Mikrofon verbunden ist, wobei die Evaluierung der Latenz die Schritte des Übertragens eines Testaudiosignals (80) über die WPAN-Schnittstelle an den externen Lautsprecher, des Steuerns des externen Lautsprechers, damit dieser ein gesendetes Testtonsignal sendet, das aus dem Testaudiosignal erzeugt wird, des Erfassens eines empfangenen Testtonsignals (81) über das Mikrofon und des Berechnens einer Kreuzkorrelation zwischen dem Testaudiosignal und dem empfangenen Testtonsignal in dem Frequenzbereich umfasst, wobei die Übertragungs- und Wiedergabelatenz einem Spitzenwert der Kreuzkorrelation entspricht.

18. Computerprogramm, das Anweisungen umfasst, die den vernetzten Lautsprecher nach einem der Ansprüche 1 bis 16 veranlassen, die Schritte des Audiowiedergabeverfahrens nach Anspruch 17 auszuführen.

19. Computerlesbarer Aufzeichnungsträger, auf dem das Computerprogramm nach Anspruch 18 gespeichert ist.

## Claims

1. Connected speaker (1) comprising:
- a LAN interface (2);
- a WPAN interface (3);
- pairing means (5) designed to pair the connected speaker with one or more external speakers (6) each equipped with an external WPAN interface (7);
- processing means (8) designed to acquire an input audio signal from an audio source (15) via the LAN interface, to produce at least one distributed audio signal from the input audio signal, to allocate each distributed audio signal to one of the external speakers (6) paired with the connected speaker, and to transmit, to each external speaker, via the WPAN interface (3) of the connected speaker (1) and the external WPAN interface (7) of said external speaker (6), the distributed audio signal that is allocated to said external speaker (6), such that the connected speaker (1) and the external speakers (6) form a multichannel audio playback system,
the connected speaker furthermore being designed to evaluate a transmission and playback latency resulting from the transmission of a distributed audio signal to an external speaker via the WPAN interface (3) and from the playback of the distributed audio signal by the external speaker, the evaluation of the transmission and playback latency being used to ensure synchronized playback by the multichannel audio playback system,
the connected speaker being arranged to evaluate the transmission and playback latency on the basis of a codec used to transmit the distributed audio signal, the connected speaker being arranged to use as a default value, for transmission and playback latency, a coding/decoding latency of said codec used;
or
the connected speaker being arranged to evaluate the transmission and playback latency using a calibration method involving a user, the calibration method comprising the steps of
- simultaneously having the connected speaker emit a first sound by applying a time offset on a noutput of the connected speaker connected to the external speaker, and the external speaker emit a second sound of different frequency
- and adjusting the time offset until the user hears the first sound and the second sound simultaneously;
- when the value of the time offset is such that the user simultaneously hears the first sound and the second sound, conferring said value to the transmission and playback latency;
or
the connected speaker being arranged to evaluate the transmission and playback latency on the basis of a model of the external speaker,
the connected speaker being arranged to use a transmission and playback latency value associated with said model of the external speaker and included in a latency table stored in the connected speaker or obtained via a network to which the connected speaker is connected;
or
the connected speaker incorporating or being connected to a microphone, the connected speaker being designed to transmit a test audio signal (80) to the external speaker via the WPAN interface, to control the external speaker such that it emits an emitted test sound signal produced from the test audio signal, to acquire a received test sound signal (81) via the microphone,
to calculate in the frequency domain a cross-correlation between the test audio signal and the received test sound signal, the transmission and playback latency corresponding to a peak of the cross-correlation.

2. Connected speaker according to Claim 1, the connected speaker (30; 61) being able to be paired individually with at least two external speakers (31, 32; 63, 64), the connected speaker being designed to transmit, directly to each external speaker, the distributed audio signal that is allocated to said external speaker (31, 32; 63, 64).

3. Connected speaker according to Claim 1, the connected speaker (40; 71) being able to be paired with a first external speaker (41; 73) that is itself paired with a second external speaker (42; 74), the connected speaker (40; 71) being designed to transmit, directly to the first external speaker (41; 73), a first distributed audio signal allocated to the first external speaker and a second distributed audio signal allocated to the second external speaker, the second distributed audio signal then being able to be transmitted to the second external speaker (42; 74) by the first external speaker (41; 73).

4. Connected speaker according to one of the preceding claims, the connected speaker being a multichannel speaker (30; 40).

5. Connected speaker according to one of Claims 1 to 3, the connected speaker being a single-channel speaker (51; 61) designed to be connected to another connected speaker (52; 62) via the LAN interface.

6. Connected speaker according to Claim 1, the connected speaker being designed to reduce a sampling frequency of the test audio signal and of the received test sound signal, to calculate a first approximation of the transmission and playback latency, and then to increase the sampling frequency and to recalculate the transmission and playback latency while keeping only a time window of limited duration centred around the first approximation of the transmission and playback latency.

7. Connected speaker according to Claim 1, wherein the emitted test sound signal is superimposed on a useful sound signal of played-back audio content.

8. Connected speaker according to Claim 1, wherein the emitted test sound signal is a signal that is normally inaudible to a human being.

9. Connected speaker according to one of the preceding claims, the connected speaker being designed to adjust a gain and/or to perform a frequency adjustment on at least one audio channel incorporating an external speaker.

10. Connected speaker according to one of the preceding claims, the connected speaker being designed to evaluate a value of a read latency of the connected speaker, and to transmit the value of the read latency to the audio source.

11. Connected speaker according to one of the preceding claims, wherein the pairing means implement pairing using the A2DP Bluetooth profile.

12. Connected speaker according to one of the preceding claims, wherein the pairing means comprise a physical button.

13. Connected speaker according to one of Claims 1 to 11, wherein the pairing means comprise a pairing module designed to interact with a configuration interface provided by an API or by a configuration webpage.

14. Connected speaker according to one of the preceding claims, wherein the LAN interface is a Wi-Fi interface.

15. Connected speaker according to one of the preceding claims, wherein the LAN interface is an Ethernet interface.

16. Connected speaker according to one of the preceding claims, wherein the WPAN interface is a Bluetooth interface.

17. Audio playback method implemented in a connected speaker according to one of the preceding claims, comprising the steps of:
- pairing the connected speaker (1) with one or more external speakers (6) each equipped with an external WPAN interface (7) ;
- acquiring an input audio signal from an audio source via the LAN interface;
- producing at least one distributed audio signal from the input audio signal;
- allocating each distributed audio signal to one of the external speakers (6) paired with the connected speaker;
- transmitting, to each external speaker, via the WPAN interface (3) of the connected speaker (1) and the external WPAN interface (7) of said external speaker (6), the distributed audio signal that is allocated to said external speaker (6), such that the connected speaker (1) and the external speakers (6) form a multichannel audio playback system,
- evaluating a transmission and playback latency resulting from the transmission of a distributed audio signal to an external speaker via the WPAN interface (3) and from the playback of the distributed audio signal by the external speaker,
- compensating the transmission and playback latency in order to ensure a synchronized restitution by the multichannel audio playback system
the transmission and playback latency being evaluated on the basis of a codec used to transmit the distributed audio signal, the evaluation comprising the step of using as a default value, for transmission and playback latency, a coding/decoding latency of said codec used;
or
the transmission and playback latency being evaluated using a calibration method involving a user, the calibration method comprising the steps of
- simultaneously having the connected speaker emit a first sound by applying a time offset on a noutput of the connected speaker connected to the external speaker, and the external speaker emit a second sound of different frequency
- and adjusting the time offset until the user hears the first sound and the second sound simultaneously;
- when the value of the time offset is such that the user simultaneously hears the first sound and the second sound, conferring said value to the transmission and playback latency;
or
the transmission and playback latency being evaluated on the basis of a model of the external speaker, the evaluation comprising the steps of using a transmission and playback latency value associated with said model of the external speaker and included in a latency table stored in the connected speaker or obtained via a network to which the connected speaker is connected;
or
the connected speaker incorporating or being connected to a microphone, the evaluation of the latency comprising the steps of transmitting a test audio signal (80) to the external speaker via the WPAN interface, of controlling the external speaker such that it emits an emitted test sound signal produced from the test audio signal, of acquiring a received test sound signal (81) via the microphone, of calculating in the frequency domain a cross-correlation between the test audio signal and the received test sound signal, the transmission and playback latency corresponding to a peak of the cross-correlation.

18. Computer program comprising instructions that lead the connected speaker according to one of Claims 1 to 16 to execute the steps of the audio playback method according to Claim 17.

19. Computer-readable recording medium on which the computer program according to Claim 18 is recorded.
